# EUROPÄISCHE PATENTSCHRIFT

(11) **EP 3 270 373 B1**
(45) Veröffentlichungstag und Bekanntmachung des Hinweises auf die Patenterteilung: **06.10.2021**
(21) Anmeldenummer: 17180024.6
(22) Anmeldetag: 06.07.2017
(51) Int. Cl.: G10K 11/162, B63B 3/68, C08J 9/00, C08J 9/33

(54) **SCHALLABSORBIERENDER FORMKÖRPER FÜR SCHIFFE UND HERSTELLUNGSVERFAHREN**
SOUND-ABSORBING MOULDED ARTICLE FOR SHIPS AND MANUFACTURING METHOD
CORPS MOULÉ INSONORISANT POUR BATEAUX ET PROCÉDÉ DE FABRICATION

(30) Priorität: 15.07.2016 DE 102016113092
(43) Veröffentlichungstag der Anmeldung: 17.01.2018
(73) Patentinhaber: MM Infra GmbH & Co. KG, 52249 Eschweiler (DE)
(72) Erfinder: MATHEY, Michael, 52249 Eschweiler (DE)
(74) Vertreter: Kohlmann, Kai

(56) Entgegenhaltungen:
- EP-A1- 2 000 488
- DE-A1- 3 825 251
- DE-A1- 19 529 408

## Beschreibung

Die Erfindung betrifft einen schallabsorbierenden Formkörper eingerichtet für die Anbringung an Flächen, beispielsweise von Schotten von Schiffen, sowie ein Verfahren zu dessen Herstellung.

Unter einem Schott versteht man eine geschlossene Trennwand in einem Schiffskörper, die sowohl luft- oder flüssigkeitsdicht als auch brandhemmend ausgelegt sein kann.

Bauartbedingt entwickeln Bootsmotoren einen hohen Lärmpegel. Zur Dämmung der Motorgeräusche wird der Motor mit Dämmmaterial eingehaust, das an den Schotten angebracht wird.

Aus dem Stand der Technik sind zu diesem Zweck unter dem Markennamen "aixFoam" vertriebene Schwerschaumabsorbtionsplatten der Schaumstoffe Helgers GmbH & Co. KG bekannt, die sich durch gute Dämmungseigenschaften auszeichnen und zugleich auch eine schalldämpfende Wirkung aufweisen. Der Schwerschaum ist mit einer Oberflächenkaschierung versehen. Diese besteht aus einer dünnen Spezialfolie, die den schallabsorbierenden Kern vor Verschmutzung schützt und als schwingende Membran fungiert. Der durch die Schotten gekapselte Motorenraum wird mit den Schwerschaumabsorbtionsplatten vollständig ausgekleidet.

Nahezu alle Materialien und Bauteile für den Einsatz auf Schiffen und Yachten müssen gemäß International Maritime Organization IMO 2010 FTP Code, Resolution MSC.307 (88) einer Nichtbrennbarkeitsprüfung unterzogen werden.

Herkömmliche elastomere Schaumstoffe bestehen diese Nichtbrennbarkeitsprüfung nicht.

Ferner ist aus der DE 38 25 251 A1 ein schwer entflammbarer Polyurethan-Verbundschaumstoff bekannt, bei dem durch die Vorgabe entsprechender Anteile von Polyurethan-Standard-Schaumstoffflocken und flammhemmend imprägnierten Polyurethan-Schaumstoffflocken ein einstellbares Brandverhalten nach Maß erreicht werden kann.

Ausgehend von diesem Stand der Technik liegt der Erfindung die Aufgabe zugrunde, einen aus preiswerten Ausgangsmaterialien herstellbaren schallabsorbierenden Formkörper zu schaffen, der die Nichtbrennbarkeitsprüfung für die Schifffahrt besteht, darüber hinaus bei geringem Volumen über gute Schallabsorptionseigenschaften verfügt und die beim Betrieb von Schiffen auftretenden tiefen Frequenzen wirksam absorbiert.

Erfindungsgemäß besteht der eingangs erwähnte schallabsorbierende Formkörper aus einem Verbundschaumstoff, der folgende zu dem Formkörper miteinander verpresste Komponenten umfasst:
- Flocken aus elastomerem Schaumstoff,
- ein Bindemittel sowie
- nicht brennbare Füllstoffe gemäß der Nichtbrennbarkeitsprüfung IMO 2010 FTP Code Teil 1 [Resolution MSC.307(88)], wobei der Masseanteil der Füllstoffe an dem Formkörper aus Verbundschaumstoff derart bestimmt ist, dass der durchschnittliche Masseverlust des Formkörpers nach Durchführung der Nichtbrennbarkeitsprüfung IMO 2010 FTP Code Teil 1 [Resolution MSC.307(88)] 50 % nicht überschreitet,
- wobei es sich bei den Füllstoffen um spezifisch schwere, nicht brennbare Materialien mit einem inhärenten Flammschutz handelt und die spezifisch schweren Füllstoffe eine Dichte von mindestens 2000 kg/m³ aufweisen.

Auch bei sorgfältiger Planung lassen sich bei der Verarbeitung von elastomeren Schaumstoffen Schneid- und Stanzreste nicht völlig vermeiden. Die Flocken werden vorzugsweise aus derartigen Schaumstoffresten durch Zerkleinern in einer Flockenmühle hergestellt. Durch diese Wiederverwertung der ohnehin anfallenden Schaumstoffreste bei der Verarbeitung von elastomeren Schaumstoffen kann ein wesentlicher Bestandteil des Verbundschaumstoffes nahezu kostenfrei bereitgestellt werden.

Damit der aus dem Verbundschaumstoff herstellbare schallabsorbierende Formkörper die Nichtbrennbarkeitsprüfung besteht, umfasst der Formkörper nicht brennbare Füllstoffe gemäß der Nichtbrennbarkeitsprüfung IMO 2010 FTP Code Teil 1 [Resolution MSC.307 (88)], wobei der Masseanteil dieser Füllstoffe an dem Formkörper aus Verbundschaumstoff derart bestimmt ist, dass der durchschnittliche Masseverlust des Formkörpers nach Durchführung der Nichtbrennbarkeitsprüfung IMO 2010 FTP Code Teil 1 [Resolution MSC.307(88)] 50 % nicht überschreitet. Bei den Füllstoffen handelt es sich um spezifisch schwere, nicht brennbare Materialien mit einem inhärenten Flammschutz, wie beispielsweise Stapelfasern aus Metall, Mineralien oder Glas, nicht jedoch um additive Flammschutzmittel. Diese können allenfalls als Zusatzstoffe zusätzlich zugegeben werden. Die spezifisch schweren Füllstoffe tragen dazu bei, dass der Formkörper die maritime Nichtbrennbarkeitsprüfung für den Schiffsbau besteht und zugleich der Schall, insbesondere der beim Betrieb von Schiffen auftretenden tiefen Frequenzen, wirksam absorbiert wird.

Der Formkörper macht sich zudem die guten schalldämmenden Eigenschaften von Verbundschaumstoffen zu Nutze. Über die Menge der Füllstoffe lässt sich darüber hinaus die Rigidität des Formkörpers beeinflussen. Durch die Zugabe des hohen Anteils an nicht brennbaren Füllstoffen wird gewährleistet, dass der durchschnittliche Masseverlust des Formkörpers aus Verbundschaumstoff nach Durchführung der maritimen Nichtbrennbarkeitsprüfung 50% nicht überschreitet.

Unterliegt der der maritimen Brennbarkeitsprüfung genügende, nicht brennbare Füllstoff keinem Masseverlust bei Durchführung der Nichtbrennbarkeitsprüfung, wie dies beispielsweise bei einigen mineralischen Füllstoffen der Fall ist, ist es ausreichend wenn der Masseanteil der Füllstoffe an dem Formkörper aus Verbundschaumstoff 50 Gew. % beträgt. Selbst wenn die Flocken bei dem maritimen Brandtest des Formkörpers vollständig verbrennen sollten, würde der durchschnittliche Masseverlust des Formkörpers bei Durchführung des Brandtests nicht überschritten. Vorzugsweise bestehen die Flocken des Verbundschaumstoffes aus einem Melaminharzschaumstoff, der hervorragende schallabsorbierende Eigenschaften aufweist und zudem schwer entflammbar ist. Insbesondere erfüllt Melaminharzschaumstoff die Brandschutzklasse B1 (schwer entflammbar) im Sinne der DIN 4102-1: 1998-05. Des Weiteren fallen Reste von Melaminharzschaumstoff in großem Umfang als Schnittabfälle an, so dass die Ausgangsmaterialien des Formkörpers kostengünstig beschafft werden können.

Insbesondere in Verbindung mit den nicht brennbaren, vorzugsweise anorganischen Füllstoffen gemäß der Nichtbrennbarkeitsprüfung für die Schifffahrt erfüllt der mit Flocken aus Melaminharzschaumstoff hergestellte Formkörper sämtliche rechtlich relevanten Kriterien der Nichtbrennbarkeit.

Aufgrund des außerordentlich großen Anwendungsspektrums von Polyurethan können unter bestimmten Umständen auch Flocken aus Polyurethanschaumstoff in dem Verbundschaumstoff verarbeitet werden, die sowohl schallabsorbierende Eigenschaften als auch ein sicheres Brandverhalten aufweisen.

Die spezifisch schweren, nicht brennbaren Füllstoffe weisen eine Dichte von mindestens 2000 kg/m³, bevorzugt von mindestens 2500 kg/m³ auf.

Die Füllstoffe sind vorzugsweise als Stapelfasern in den Verbundschaumstoff eingebettet. Eine hohe Stabilität des Formkörpers wir erreicht, wenn die Stapellänge der Fasern in einem Bereich von 15 - 80 mm liegt. Die Fasern können auch als flächige Verstärkungsstoffe in Form von Geweben, Gelegen, Gestricken oder Gewirken vorliegen.

Die nicht brennbaren Stapelfasern können beispielsweise aus Basalt, Glas, Eisen, Stahl, Quarz, Silikat, Keramik, Teflon oder andere anorganischen Materialien bestehen, wobei die Stapelfasern eine Zündtemperatur von mindestens 755° C bei Normdruck aufweisen. Der Norm- bzw. Standarddruck beträgt 1,01325 bar. Die Zündtemperatur, auch als Selbstentzündungstemperatur bezeichnet, ist diejenige Temperatur, auf die man die Stapelfaser erhitzen muss, damit sie sich in Gegenwart von Umgebungsluft ausschließlich aufgrund seiner Temperatur - also ohne Zündquelle - selbst entzündet.

Die Stapelfasern werden möglichst gleichmäßig mit den Flocken während des Herstellprozesses vermischt, um den Formkörper mit gleichmäßiger Dichteverteilung herzustellen. Die Vermischung kann beispielsweise pneumatisch oder mechanisch, beispielweise mit einer Einstreuvorrichtung, einem Mischer oder Rührwerk erfolgen.

Besonders bevorzugt umfasst der Formkörper Schaumstoffflocken aus Melaminharzschaumstoff und anorganische Stapelfasern aus Glas. Beide Ausgangsmaterialien sind am Markt als Abfallstoffe in großen Mengen verfügbar und tragen hervorragend zur Nichtbrennbarkeit des Formkörpers bei. Hinzu kommt das spezifisch hohe Gewicht von Glas, das dazu beiträgt, dass der Anteil der Füllstoffe gering gehalten werden kann.

Als Bindemittel kommen aufgrund ihres günstigen Brandverhaltens beispielsweise wässerige Dispersionsklebstoffe zum Einsatz, wie insbesondere ein Isocyanat-terminiertes Prepolymer. Der Dispersionsklebstoff nutzt Wasser als Dispersionsmittel, in dem die thermoplastischen oder elastomeren Polymerpartikel als Dispersion vorliegen. Durch das Isocyanat als Vernetzer wird die Adhäsion und Kohäsion deutlich verbessert. Das Zugeben des Bindemittels erfolgt insbesondere durch ein Benetzen der Schaumstoffflocken und/oder des Füllstoffes mit dem Dispersionsklebstoff.

Als Bindemittel kommen zudem lösungsmittelfreie Schmelzklebstoffe, insbesondere auf Polymerbasis, in Betracht. Der Schmelzklebstoff kann den Schaumstoffflocken und dem Füllstoff vorzugsweise als Granulat oder Pulver zugegeben und anschließend vermischt werden. Durch Zufuhr von Wärme zu dem Gemisch wird die Temperatur des Schmelzklebstoffs auf oder über dessen Schmelzpunkt, üblicherweise bei 100 °C - 200 °C, angehoben, wodurch sich beim anschließenden Abkühlen die Schaumstoffflocken mit den Füllstoffen verbinden.

Eine andere Möglichkeit für die Zugabe des Schmelzlebstoffs als Bindemittel besteht darin, die Füllstoffe und/oder die Schaumstoffflocken vor dem Vermischen mit dem verflüssigten Schmelzklebstoff zu beschichten, wobei sich die Beschichtung auf deren Oberfläche nach Abkühlung verfestigt. Die Zuführ des Bindemittels kann hierdurch zeitlich von dem übrigen Herstellungsverfahren des schallabsorbierenden Formkörpers entkoppelt werden. Vorzugsweise werden die Füllstoffe in Form von Stapelfasern vorab mit dem Schmelzklebstoff beschichtet.

Im Anschluss an das Vermischen der Schaumstoffflocken und der Füllstoffe wird durch Zufuhr von Wärme die Temperatur des verfestigten Schmelzklebstoffs auf oder über dessen Schmelzpunkt angehoben, wodurch sich beim anschließenden Abkühlen die Schaumstoffflocken mit den Füllstoffen verbinden.

In einer besonders bevorzugten Ausführungsform der Erfindung kommen als Bindemitteln Schmelzklebefasern zum Einsatz. Sie können als Einkomponenten Schmelzklebefasern mit einem Vollprofil oder als Bikomponenten Schmelzklebefasern mit einem Faserkern und einem Fasermantel ausgeführt sein, wobei Faserkern und Fasermantel einen unterschiedlichen Schmelzpunkt aufweisen.

Die Einkomponenten Schmelzklebefasern bestehen insbesondere aus Copolyamiden, beispielsweise mit einem Schmelzpunkt von 135 °C, oder Copolyestern, beispielsweise mit einem Schmelzpunkt von 150 °C.

Die Bikomponenten Schmelzklebefasern weisen beispielsweise einen Faserkern aus Polyamid 6.6 mit einem Schmelzpunkt von 260°C und einen Fasermantel aus Polyamid 6 mit einem Schmelzpunkt von 220°C auf. Faserkern und Fasermantel können auch aus unterschiedlichen Polyestern bestehen.

Die Schmelzklebfasern werden mit den Flocken aus Schaumstoff, insbesondere aus Melaminharzschaumstoff, und den Füllstoffen, insbesondere Stapelfasern vermischt, und zu dem schallabsorbierenden Formkörper unter Zufuhr von Wärme verpresst. Die Bikomponenten Schmelzklebefasern tragen zu einer höheren Rigidität des Formkörpers bei, wenn die Zufuhr der Wärme beim Verpressen derart gesteuert wird, dass lediglich der Fasermantel aufschmilzt, nicht jedoch der Faserkern mit einer höheren Schmelztemperatur.

Die Herstellung des Formkörpers aus Verbundschaumstoff umfasst folgende Schritte:
- Bereitstellen von Flocken aus Schaumstoff, insbesondere mit einer maximalen Längserstreckung in einem Bereich von 5 mm - 25 mm,
- Zugeben von nichtbrennbaren Füllstoffen gemäß der Nichtbrennbarkeitsprüfung IMO 2010 FTP Code Teil 1 [Resolution MSC.307(88)],
- wobei der Masseanteil der Füllstoffe derart bestimmt wird, dass der durchschnittliche Masseverlust des hergestellten Formkörpers nach Durchführung der Nichtbrennbarkeitsprüfung IMO 2010 FTP Code Teil 1 [Resolution MSC.307(88)] 50 % nicht überschreitet,
- Zugeben eines Bindemittels zu den Flocken und den Füllstoffen,
- Verpressen der Komponenten zu dem Formkörper.

Dem Schritt des Bereitstellens der Flocken geht vorzugsweise eine Zerkleinerung der Flocken, insbesondere mithilfe einer Flockenmühle, aus Schaumstoffresten, insbesondere Melaminharz-Schaumstoffresten voran.

Die vor dem Verpressen der Komponenten zugegebenen Füllstoffe bestehen vorzugsweise aus Stapelfasern aus einem nicht brennbarem Material, wie beispielsweise Basalt oder Glas mit einem hohen spezifischen Gewicht.

Um die mittlere Dauer der anhaltenden Entflammung des Formkörpers des Formkörpers während der Durchführung der Nichtbrennbarkeitsprüfung IMO 2010 FTP Code Teil 1 [Resolution MSC.307(88)] zu verkürzen, können dem Gemisch aus Flocken, Bindemittel und Füllstoffen Flammschutzmittel als Zusatzstoffe zugegeben werden. Insbesondere kommen die in der DIN EN ISO 1043-4 klassifizierten Flammschutzmittel für Kunststoffe in Betracht. Teil 4 der DIN EN ISO 1043 wurde 1999 veröffentlicht.

Das Zugeben des Bindemittels erfolgt beispielsweise
- durch ein Benetzen der Flocken und/oder des Füllstoffes, beispielsweise durch Besprühen,
- durch Vermischung der Flocken und des Füllstoffes mit einem als Granulat oder Pulver vorliegendem Schmelzklebstoff oder
- durch Zugabe von Schmelzklebefasern zu den Flocken und dem Füllstoff.

Das Verpressen der Komponenten zu dem Formkörper erfolgt in einer Presse, wobei abhängig vom verwendeten Bindemittel vor und/oder während des Pressens Wärme zugeführt werden muss, beispielsweise im Wege einer Heißdampfinjektion oder mit heißer Luft. Der Heißdampf wird der Pressform über Durchgänge in der Form zugeführt.

Abhängig vom Anwendungsfall können die Formkörper schließlich auf Schneid- beziehungsweise Stanzmaschinen konfektioniert werden.

Neben den guten schallabsorbierenden Eigenschaften zeichnet sich der erfindungsgemäße Verbundschaumstoff-Formkörper durch seine Langlebigkeit, hohe Festigkeit und Temperaturbeständigkeit aus, was ihn für den Einsatz an Schotten von Schiffen besonders geeignet macht.

### Ausführungsbeispiel

- Bereitstellen von Flocken durch Zerkleinern von Melaminharzschaumstoffresten zu Melaminharzschaumstoffflocken.
- Zugeben von 60 Gew. % bezogen auf die Gesamtmasse der Ausgangsmaterialien von nichtbrennbaren Stapelfasern aus Basalt mit einer Stapellänge von 22,5 mm als Füllstoff.
- Zugeben von 18 Gew.% bezogen auf die Gesamtmasse der Ausgangsmaterialien von Bikomponenten Schmelzklebefasern bestehend aus Polyester, mit einem Schmelzpunkt von 110 °C im Fasermantel und einem höheren Schmelzpunkt des Faserkerns sowie einer Faserlänge von 32,0 mm mit einer Toleranz von + / -2,2 mm.
- Verpressen der Komponenten in einer Thermopresse zu dem Formkörper bei einer Temperatur von 130 °C und einer Pressdauer von etwa 30 Minuten. Dem erstellten, formstabilen Formkörper wurde eine Probe entnommen und die Nichtbrennbarkeitsprüfungs IMO 2010 FTP Code Teil 1 [Resolution MSC.307(88)] durchgeführt.
- Der vorstehende Masseanteil der nicht brennbaren Stapelfasern war ausreichend, dass der Masseverlust des hergestellten Formkörpers nach Durchführung der Nichtbrennbarkeitsprüfung IMO 2010 FTP Code Teil 1 [Resolution MSC.307(88)] weniger als 50 % betrug.

## Patentansprüche

1. Schallabsorbierender Formkörper eingerichtet für die Anbringung an Flächen von Schiffen, wobei
- der Formkörper aus einem Schaumstoff besteht, der folgende zu dem Formkörper miteinander verpresste Komponenten umfasst:
- Flocken aus Schaumstoff,
- ein Bindemittel,
- nichtbrennbare Füllstoffe **dadurch gekennzeichnet, dass** es sich bei den nichtbrennbaren Füllstoffen um Füllstoffe gemäß der Nichtbrennbarkeitsprüfung International Maritime Organisation IMO 2010 FTP Code Teil 1, Resolution MSC.307 (88) handelt, wobei der Masseanteil der Füllstoffe an dem Formkörper aus Verbundschaumstoff derart bestimmt ist, dass der durchschnittliche Masseverlust des Formkörpers nach Durchführung der Nichtbrennbarkeitsprüfung International Maritime Organisation IMO 2010 FTP Code Teil 1, Resolution MSC.307 (88), 50 % nicht überschreitet
- wobei es sich bei den Füllstoffen um spezifisch schwere, nicht brennbare Materialien mit einem inhärenten Flammschutz handelt und die spezifisch schweren Füllstoffe eine Dichte von mindestens 2000 kg/m³ aufweisen.

2. Schallabsorbierender Formkörper nach Anspruch 1, **dadurch gekennzeichnet, dass** die Flocken aus zerkleinerten Schaumstoffresten herstellbar sind.

3. Schallabsorbierender Formkörper nach Anspruch 1 oder 2, **dadurch gekennzeichnet, dass** die Flocken aus einem Melaminharzschaumstoff bestehen.

4. Schallabsorbierender Formkörper nach einem der Ansprüche 1 bis 3, **dadurch gekennzeichnet, dass** die Füllstoffe aus anorganischem Material bestehen.

5. Schallabsorbierender Formkörper nach einem der Ansprüche 1 bis 4, **dadurch gekennzeichnet, dass** die Füllstoffe als Stapelfasern in den Verbundschaumstoff eingebettet sind.

6. Schallabsorbierender Formkörper nach Anspruch 5, **dadurch gekennzeichnet, dass** die Stapelfasern aus anorganischen Materialien eine Zündtemperatur von mindestens 755° C bei Normdruck aufweisen.

7. Schallabsorbierender Formkörper nach einem der Ansprüche 1 bis 6, **dadurch gekennzeichnet, dass** der Formkörper als Bindemittel wahlweise einen wässerigen Dispersionsklebstoff, einen Schmelzklebstoff oder Schmelzklebfasern enthält.

8. Schallabsorbierender Formkörper nach Anspruch 7, **dadurch gekennzeichnet, dass** die Schmelzklebefasern Einkomponenten Schmelzklebfasern oder Bikomponenten Schmelzklebefasern sind.

9. Verfahren zur Herstellung eines schallabsorbierenden Formkörpers eingerichtet für die Anbringung an Flächen von Schiffen, wobei der Formkörper mit folgenden Schritten aus einem Verbundschaumstoff hergestellt wird:
- Bereitstellen von Flocken aus Schaumstoff,
- Zugeben von nichtbrennbaren Füllstoffen **dadurch gekennzeichnet, dass** es sich bei den nichtbrennbaren Füllstoffen um Füllstoffe gemäß der Nichtbrennbarkeitsprüfung International Maritime Organisation IMO 2010 FTP Code Teil 1, Resolution MSC.307 (88) handelt, wobei
- es sich bei den Füllstoffen um spezifisch schwere, nicht brennbare Materialien mit einem inhärenten Flammschutz handelt und die spezifisch schweren Füllstoffe eine Dichte von mindestens 2000 kg/m³ aufweisen und
- der Masseanteil der Füllstoffe derart bestimmt wird, dass der durchschnittliche Masseverlust des hergestellten Formkörpers nach Durchführung der Nichtbrennbarkeitsprüfung International Maritime Organisation IMO 2010 FTP Code Teil 1, Resolution MSC.307 (88), 50 % nicht überschreitet,
- Zugeben eines Bindemittels zu den Flocken und den Füllstoffen und
- Verpressen der Komponenten zu dem Formkörper.

10. Verfahren nach Anspruch 9, **dadurch gekennzeichnet, dass** Flocken aus einem Melaminharzschaumstoff bereitgestellt werden.

11. Verfahren nach einem der Ansprüche 9 oder 10, **dadurch gekennzeichnet, dass** anorganische Füllstoffe als Stapelfasern in den Verbundschaumstoff eingebettet werden.

12. Verfahren nach Anspruch 11, **dadurch gekennzeichnet, dass** Stapelfasern aus Glas in den Verbundschaumstoff eingebettet werden.

13. Verfahren nach Anspruch 11 oder 12, **dadurch gekennzeichnet, dass** die Flocken, die Stapelfasern und das Bindemittel vor dem Schritt des Verpressens miteinander vermischt werden.

14. Verfahren nach einem der Ansprüche 9 bis 13, **dadurch gekennzeichnet, dass** das Zugeben des Bindemittels durch ein Benetzen der Flocken und/oder des Füllstoffs mit dem Bindemittel erfolgt .

15. Verfahren nach einem der Ansprüche 9 bis 13, **dadurch gekennzeichnet, dass** als Bindemittel Schmelzklebefasern zugegeben werden und das Verpressen unter Zufuhr von Wärme erfolgt.

## Claims

1. Sound-absorbing moulded article adapted for attachment to surfaces of ships, wherein
- the moulded article consists of a foam which comprises the following components pressed together to form the moulded article:
- flakes of foam,
- a binder,
- non-combustible fillers, **characterized in that** the non-combustible fillers are fillers according to the non-combustibility test International Maritime Organisation IMO 2010 FTP Code Part 1, Resolution MSC.307 (88), wherein the mass fraction of the fillers in the moulded article made of composite foam is determined in such a manner that the average loss of mass of the moulded article after performing the non-combustibility test International Maritime Organisation IMO 2010 FTP Code Part 1, Resolution MSC.307 (88) does not exceed 50 %,
- wherein the fillers are specifically heavy non-combustible materials having an inherent flame retardancy and the specifically heavy fillers have a density of at least 2000 kg/m³.

2. Sound-absorbing moulded article according to Claim 1, **characterized in that** the flakes can be produced from comminuted foam residue.

3. Sound-absorbing moulded article according to Claim 1 or 2, **characterized in that** the flakes consist of a melamine resin foam.

4. Sound-absorbing moulded article according to one of Claims 1 to 3, **characterized in that** the fillers consist of inorganic material.

5. Sound-absorbing moulded article according to one of Claims 1 to 4, **characterized in that** the fillers are embedded as staple fibres in the composite foam.

6. Sound-absorbing moulded article according to Claim 5, **characterized in that** the staple fibres of inorganic materials have an ignition temperature of at least 755 °C at standard pressure.

7. Sound-absorbing moulded article according to one of Claims 1 to 6, **characterized in that** the moulded article optionally contains as adhesive an aqueous dispersion adhesive, a hot-melt adhesive or hot-melt adhesive fibres.

8. Sound-absorbing moulded article according to Claim 7, **characterized in that** the hot-melt adhesive fibres are single-component hot-melt adhesive fibres or bicomponent hot-melt adhesive fibres.

9. Method for producing a sound-absorbing moulded article adapted for attachment to surfaces of ships, wherein the moulded article is produced from a composite foam by means of the following steps:
- providing flakes of foam,
- adding non-combustible fillers, **characterized in that** the non-combustible fillers are fillers according to the non-combustibility test International Maritime Organisation IMO 2010 FTP Code Part 1, Resolution MSC.307 (88),
- wherein the fillers are specifically heavy non-combustible materials having an inherent flame retardancy and the specifically heavy fillers have a density of at least 2000 kg/m³ and
- the mass fraction of the fillers is determined in such a manner that the average loss of mass of the moulded article after performing the non-combustibility test International Maritime Organisation IMO 2010 FTP Code Part 1, Resolution MSC.307 (88) does not exceed 50 %,
- adding a binder to the flakes and the fillers and
- pressing the components to form the moulded article.

10. Method according to Claim 9, **characterized in that** flakes are prepared from a melamine resin foam.

11. Method according to one of Claims 9 or 10, **characterized in that** inorganic fillers are embedded in the composite foam as staple fibres.

12. Method according to Claim 11, **characterized in that** staple fibres of glass are embedded in the composite foam.

13. Method according to Claim 11 or 12, **characterized in that** the flakes, the staple fibres and the binder are mixed together before the pressing step.

14. Method according to one of Claims 9 to 13, **characterized in that** the addition of the binder is made by wetting the flakes and/or the filler with the binder.

15. Method according to one of Claims 9 to 13, **characterized in that** hot-melt adhesive fibres are added as binder and the pressing is carried out by applying heat.

## Revendications

1. Corps moulé insonorisant, aménagé pour être monté sur des surfaces de navires,
- le corps moulé consistant dans une mousse synthétique qui comprend les composants suivants, compressés pour obtenir le corps moulé :
- des flocons de mousse synthétique,
- un agent liant,
- des agents de charge incombustibles, **caractérisé en ce que** les agents de charge incombustibles sont des agents de charge selon l'essai d'incombustibilité International Maritime Organisation IMO 2010 FTP Code, partie 1, Resolution MSC. 307 (88), la part en masse des agents de charge dans le corps moulé en mousse synthétique composite étant déterminée de sorte que la perte massique moyenne du corps moulé après réalisation de l'essai d'incombustibilité International Maritime Organisation IMO 2010 FTP Code, partie 1, Resolution MSC. 307 (88) ne dépasse pas 50 %,
- les agents de charge étant des matières non combustibles spécifiquement lourdes, dotées d'un caractère ignifuge inhérent et les agents de charge spécifiquement lourds faisant preuve d'une densité d'au moins 2000 kg/m³.

2. Corps moulé insonorisant selon la revendication 1, **caractérisé en ce que** les flocons peuvent être fabriqués à partir de restes broyés de mousse synthétique.

3. Corps moulé insonorisant selon la revendication 1 ou 2, **caractérisé en ce que** les flocons consistent dans une mousse synthétique de résine mélaminée.

4. Corps moulé insonorisant selon l'une quelconque des revendications 1 à 3, **caractérisé en ce que** les agents de charge consistent dans une matière inorganique.

5. Corps moulé insonorisant selon l'une quelconque des revendications 1 à 4, **caractérisé en ce que** les agents de charge sont incorporés dans la mousse synthétique composite sous la forme de fibres courtes.

6. Corps moulé insonorisant selon la revendication 5, **caractérisé en ce que** les fibres courtes en matières inorganiques présentent une température d'inflammation d'au moins 755 °C à une pression standard.

7. Corps moulé insonorisant selon l'une quelconque des revendications 1 à 6, **caractérisé en ce que** le corps moulé contient en tant qu'agent liant sélectivement un agent adhésif de dispersion aqueux, un agent adhésif thermofusible ou des fibres adhésives thermofusibles.

8. Corps moulé insonorisant selon la revendication 7, **caractérisé en ce que** les fibres adhésives thermofusibles sont des fibres adhésives thermofusibles monocomposant ou des fibres adhésives thermofusibles bicomposants.

9. Procédé, destiné à fabriquer un corps moulé insonorisant, aménagé pour être monté sur des surfaces de navires, le corps moulé étant fabriqué à partir d'une mousse synthétique composite par les étapes suivantes, consistant à :
- mettre à disposition des flocons en mousse synthétique,
- ajouter des agents de charge incombustibles, **caractérisé en ce que** les agents de charge incombustibles sont des agents de charge selon l'essai d'incombustibilité International Maritime Organisation IMO 2010 FTP Code, partie 1, Resolution MSC. 307 (88),
- les agents de charge étant des matières non combustibles spécifiquement lourdes, dotées d'un caractère ignifuge inhérent et les agents de charge spécifiquement lourds faisant preuve d'une densité d'au moins 2000 kg/m³, et
- la part en masse des agents de charge étant déterminée de sorte que la perte massique moyenne du corps moulé après réalisation de l'essai d'incombustibilité International Maritime Organisation IMO 2010 FTP Code, partie 1, Resolution MSC. 307 (88) ne dépasse pas 50 %,
- ajouter un agent liant aux flocons et aux agents de charge,
- compresser les composants pour obtenir le corps moulé.

10. Procédé selon la revendication 9, **caractérisé en ce que** l'on met à disposition des flocons en une mousse synthétique de résine mélaminée.

11. Procédé selon l'une quelconque des revendications 9 ou 10, **caractérisé en ce que** l'on incorpore dans la mousse synthétique composite des agents de charge inorganiques sous la forme de fibres courtes.

12. Procédé selon la revendication 11, **caractérisé en ce que** l'on incorpore des fibres courtes en verre dans la mousse synthétique composite.

13. Procédé selon la revendication 11 ou 12, **caractérisé en ce que** l'on mélange les uns aux autres les flocons, les fibres courtes et l'agent liant avant l'étape de la compression.

14. Procédé selon l'une quelconque des revendications 9 à 13, **caractérisé en ce que** l'ajout de l'agent liant s'effectue en humectant les flocons et/ou l'agent de charge avec l'agent liant.

15. Procédé selon l'une quelconque des revendications 9 à 13, **caractérisé en ce que** l'on ajoute en tant qu'agent liant des fibres adhésive thermofusibles et **en ce que** la compression s'effectue sous apport de chaleur.
